# EUROPEAN PATENT APPLICATION

(11) **EP 4 825 552 A1**
(43) Date of publication of application: **21.10.2026**
(21) Application number: 26173045.1
(22) Date of filing: 17.04.2026
(51) Int. Cl.: B27L 1/08

(54) **LOG DEBARKER WITH COOLING UNIT AND METHOD OF COOLING A LOG DEBARKER**

(30) Priority: 17.04.2025 US 202563790548 P
(71) Applicant: Bid Group Technologies Ltd., Prince George, BC V2L 3L6 (CA)
(72) Inventor: FAUCHER, Pierre, Saint-georges, QC G5Y 8G4 (CA); BRETON, Francois, Saint-georges, QC G5Y 8G4 (CA); DOYON, Pierre-Olivier, Saint-georges, QC G5Y 8G4 (CA)
(74) Representative: EP&C

(57) **Abstract**

A cooling system for log debarking operations is provided. The system comprises a cooling unit connected to a rotor by a low and a high temperature line. The cooling unit extracts heat from the fluid which then flows through the low temperature line into the rotor and absorbs the heat, which helps reduce the wear between the friction rings. The fluid then flows back to the cooling unit through the high temperature line where the cycle repeats.

## Description

### FIELD OF THE INVENTION

The present invention generally relates to log debarkers and to operations of the same. More specifically, the present invention generally relates to log debarkers generating considerable frictional heat within a seal in the regions of contact between the seal parts moving in relation to one another. Furthermore, the present invention relates to log debarkers comprising a system to cool a rotary seal and to methods for reducing or stopping frictional heat generated by a log debarker.

### BACKGROUND OF THE INVENTION

A common type of log debarker includes a frame, a ring mounted for rotation on the frame, and air-pressure actuated debarking arms carried on the ring. Pressurized air is generally supplied to the arms through a rotary seal having stationary and rotatable seal portions carried on the frame and on the ring, respectively.

In US Patent no. 4,402,353 A, the rotatable seal portion comprises a pair of spaced annular elements defining annular walls. The stationary seal portion includes a ring structure disposed between the annular elements, and a pair of sealing rings carried on the ring structure and biased against associated annular walls in the said annular elements. During debarking operations, considerable frictional heat is generated in the seal in the regions of contact between the relatively moving seal parts. The buildup of frictional heat in the seal tends to produce heat stress wear in the seal, degrading the seal and ultimately requiring seal replacement.

Accordingly, there is a need for a log debarker adapted to be cooled during debarking operations and for methods for cooling and reducing frictional heat produced by a log debarker in operation. There is also a need to improve and solve the problem of debarding having premature degradation of the rotary seal at high rotational speeds and which may not be operated at an optimal speed.

### SUMMARY OF THE INVENTION

The shortcomings of the prior art are generally mitigated by a log debarker comprising a cooling system adapted to reduce heat in a rotary seal of the log debarker. In some aspects of the invention, the cooling system is a liquid cooling system.

In an aspect of the invention, a log debarker comprises a liquid cooling system which substantially reduces heat buildup in a rotary seal of the type described above.

In one aspect of the invention, a log debarking apparatus is provided. The log debarking apparatus comprises a frame, a debarker ring rotatably mounted to the frame and adapted to receive and debark a log by rotating cutting tools around the log and a cooling system configured to circulate a cooling fluid within the debarker ring.

The cooling system may comprise a cooling unit, a closed-loop fluid circuit in fluid communication with the cooling system, the circuit comprising a cooled supply line and a heat absorbed return line fluidly connected to an inner portion of the debarker ring. The cooling system may be selected from the group consisting of a heat pump, geothermal system, and a liquid chiller. The cooling fluid may be a coolant liquid.

The debarker ring may comprise a rotary air seal and a bearing assembly facilitating relative movement between stationary and rotating parts and internal cooling channels proximate to the rotary seal and the bearing assembly adapted to dissipate heat generated during operation of the debarker ring, the internal cooling channels may be in fluid communication with the cooling system.

The rotary air seal may comprise fixed and rotating friction rings, the cooling channels may be positioned adjacent to friction interfaces to optimize dissipation of heat from the friction ring. The bearing assembly may be thermally coupled to the fluid circuit to maintain the bearing assembly within an operating temperature range during operation.

The log debarking apparatus may further comprise a temperature sensor configured to detect temperature within the debarker ring. The temperature sensor may be operatively connected to a flow controller adapted to regulate the flow rate of the cooling fluid based on the detected temperature.

The cooling system may comprise input and output tubes forming a coolant path around the debarker ring. The coolant path may be divided into three sections positioned around the ring. The debarker ring may comprise air suppliers configured as tunnels, and wherein the cooling system comprises internal channels positioned inside walls of the tunnels to create a path for the cooled fluid.

In another aspect of the invention, a method of cooling a log debarker is provided. The method comprises circulating a cool fluid around a ring of the log debarker to absorb heat generated by the said ring and cooling the fluid having absorbed heat before returning to the ring. The method may further comprise circulating the cooled fluid within a first inner channel of the log debarker ring, circulating the fluid out of the first inner channel and circulating the fluid exited from the first inner channel within a second inner channel of the debarker ring. The method may further comprise detecting temperature around the ring and controlling flow rate of the cool fluid based on the detected temperature.

Other and further aspects and advantages of the present invention will be obvious upon an understanding of the illustrative embodiments about to be described or will be indicated in the appended claims, and various advantages not referred to herein will occur to one skilled in the art upon employment of the invention in practice.

### BRIEF DESCRIPTION OF THE DRAWINGS

The above and other aspects, features and advantages of the invention will become more readily apparent from the following description, reference being made to the accompanying drawings in which:
FIG. 1 is a perspective view of an embodiment of log debarker comprising a cooling unit in accordance with the principles of the present invention.
FIG. 2 is a perspective view of the debarker rotor of FIG. 1 adapted to receive a coolant circulation system.

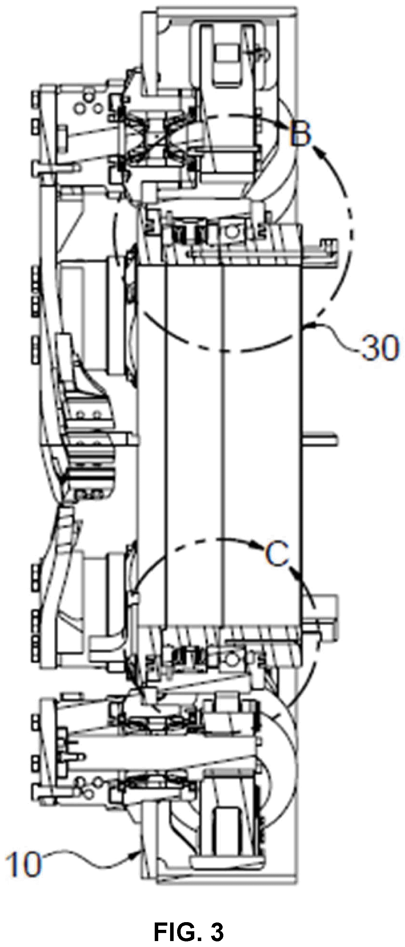

FIG. 3 is a cross-sectional view of the rotary seal and bearing assembly of the log debarker of FIG. 1.
FIG. 4A is an enlarged sectional view of the portion B of the debarker ring of FIG. 3 showing airflow tunnels.
FIG. 4B is an enlarged sectional view of the portion C of the debarker ring of FIG. 3 showing the friction interface and cooling circuit.
FIG. 5A is a cross-sectional view of an embodiment of a log debarker unit showing coolant flowing through the rotor of the log debarker unit in accordance with the principles of the present invention.
FIG. 5B is an enlarged sectional view of the encircled portion of FIG. 5A showing the path of the coolant through the internal channels.

### DETAILED DESCRIPTION OF THE INVENTION

A novel log debarker with cooling unit and method of cooling a log debarker will be described hereinafter. Although the invention is described in terms of specific illustrative embodiments, it is to be understood that the embodiments described herein are by way of example only and that the scope of the invention is not intended to be limited thereby.

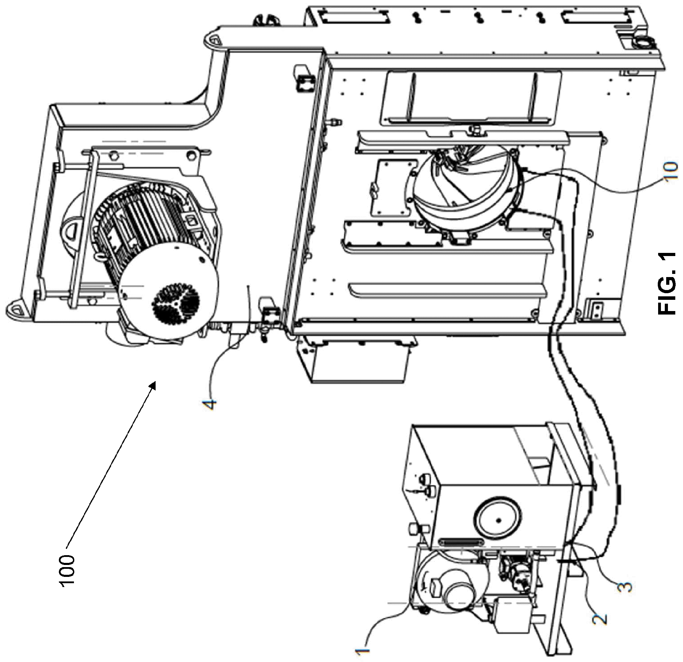

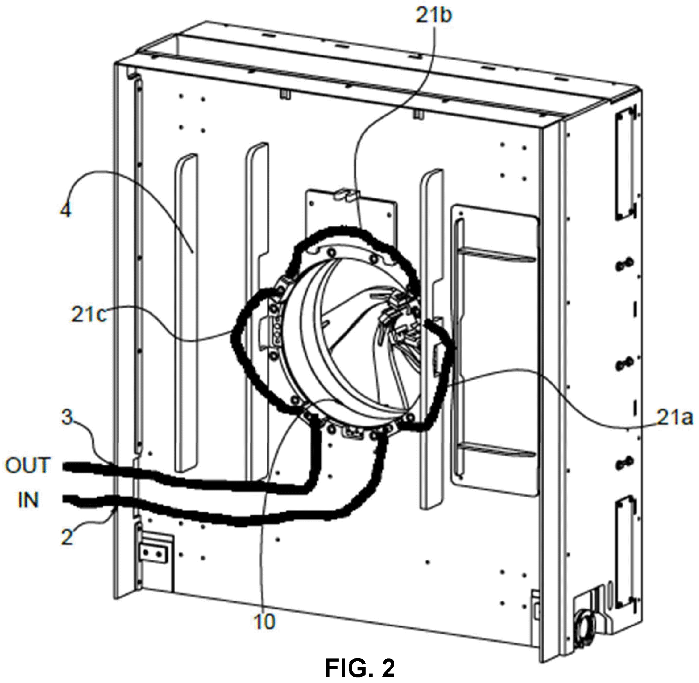

Referring to FIG. 1 and 2, an embodiment of a log debarker 100 comprising a cooling unit 1 is illustrated.

The log debarker 100 generally comprises an infeed module (not shown), a cassette 4, a debarking ring 10 and an outfeed module (not shown). Broadly, a log or stem enters the infeed module and passes through the debarking rings 10 in operation mode. The ring 10 comprises arms which remove the bark from the log by rotating around the said log. The barkless log is then moved to the outfeed module before exiting the apparatus.

The log debarker 100 contains a ring 10 connected in fluid communication with the cooling unit 1. In the illustrated embodiment, which can be combined with any other embodiment described herein, the ring 10 is connected to the cooling unit 1 with an input tube 2 and an output tube 3. A coolant liquid or gas flows through the input tube 2 after being cooled by the cooling unit 1 and returns to the cooling unit 1 through the output tube 3, forming a coolant path. The coolant path is typically divided into three (3) sections positioned around the ring 10. After flowing through the different sections, the coolant is returned toward the cooling unit 1 through the output tube 3. As such, all the sides of the ring 10 are maintained at a temperature within an acceptable operating range by the coolant fluid flowing around the ring 10. Understandably, the coolant path may comprise any number of sections adapted to maintain the ring 10 within the acceptable temperature range. The coolant path may also be divided in independent paths each in fluid communication with the cooling unit 1.

The tubes 2 are typically made of rigid material to sustain high pressure, such as metal, plastic or any other material typically used for circulating coolant fluid.

In some embodiments, which can be combined with any other embodiment described herein, the coolant fluid is a refrigerant fluid, such as a refrigerant liquid or gas. As examples, the refrigerant liquid may be an ethylene or glycol based liquid which may or may not be mixed with water. Exemplary coolant gas may be freon, nitrogen or other compressible gases used for cooling. The coolant fluid preferably has antifreeze properties and may offer protection against corrosion, rust and/or scale buildup inside the cooling system. Understandably, water or water-based liquid may be used. Understandably, any coolant fluid may be used within the scope of the present invention.

Referring to FIG. 1, the illustrated log debarker 100 comprises a cassette or frame 4 and a rotor or ring 10. The cassette 4 is typically configured to hold a rotor 10. In use, a log is inserted into the rotor 10 to undergo debarking. The cooling unit 1 is connected to the cassette 4 and the rotor 10 via a low-temperature line 2 and a high-temperature line 3. The high-temperature line 3 flows from the ring 10 to the cooling unit 1 where the fluid is cooled. The low-temperature line 2 flows from the cooling unit 1 toward the ring 10 where the fluid absorbs frictional heat generated by the ring 10 in operation. In the illustrated embodiment, which can be combined with any other embodiment described herein, the cooling unit 1 comprises a fan to cool the coolant fluid. In other embodiments, which can be combined with any other embodiment described herein, the cooling unit 1 may comprise a heat pump, a geothermal system, or any suitable system for extracting heat from a fluid, gas or liquid.

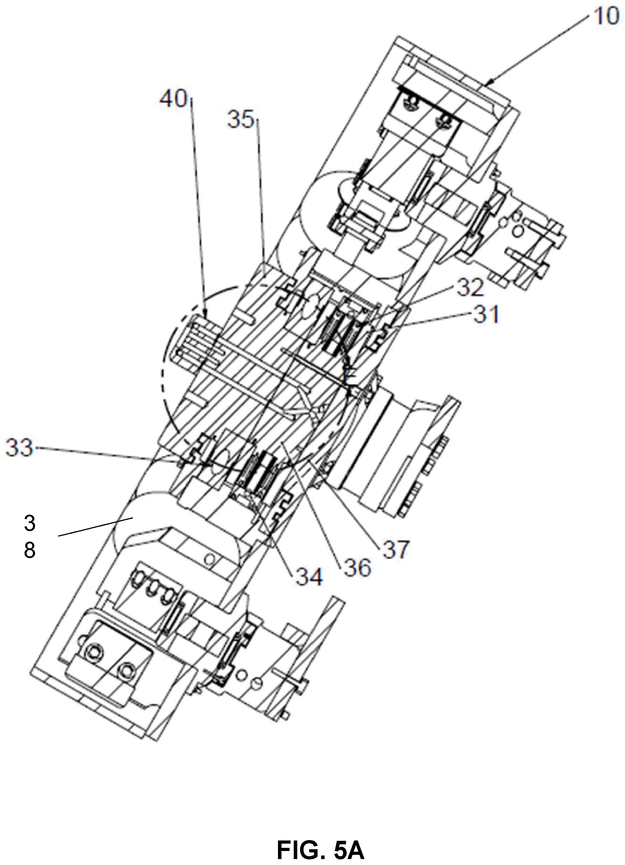

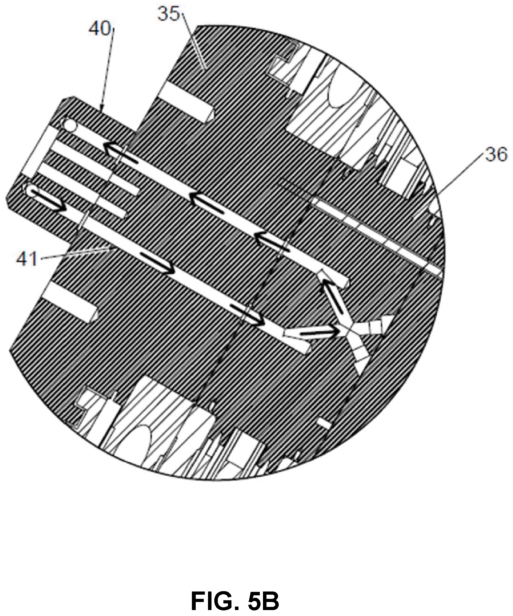

Referring now to FIGS. 2 and 5B, a more detailed view of the cassette 4 and the rotor 10 is shown. As illustrated, the fluid flows through the low-temperature line 2, enters and circulates in the rotor 10 through the internal channels 41. As the coolant fluid circulates within the rotor 10, the coolant fluid absorbs the heat generated by the internal components of the apparatus.

After circulating through the internal channels 41, the cooling fluid exits the rotor 10. In the illustrated embodiment, which can be combined with any other embodiment described herein, the cooling fluid exits through connection hoses 21a, 21b, and 21c before entering another internal channel 41. The connection hoses 21a, 21b, and 21c allow the cooling liquid to circulate through multiple internal channels 41 around the rotor 10 absorbing heat generated by the rotor 10, and then return through the high-temperature line 3 to the cooling unit 1. Understandably, the number of internal channels 41, and therefore connecting tubes 21, may vary in order to maintain the ring 10 within an acceptable temperature range. Furthermore, in other embodiments, which can be combined with any other embodiment described herein, the plurality of sequential internal channels 41 may be replaced by independent cooling paths, each path independently circulating the cooling fluid through an inner channel and through the cooling unit.

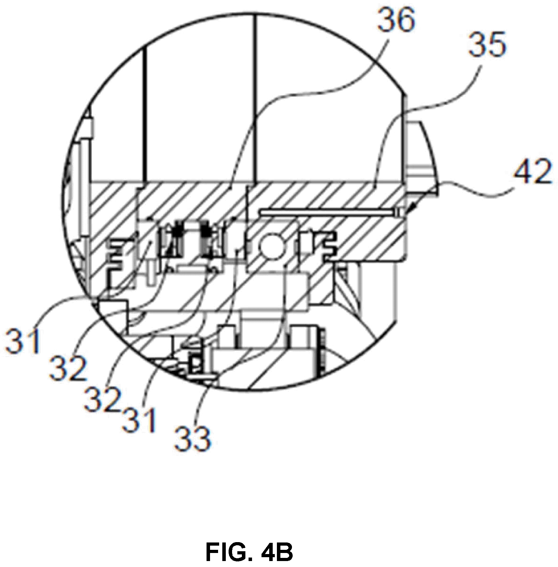

In some embodiments, which can be combined with any other embodiment described herein, the system may comprise a temperature sensor or probe 42 positioned within or near the rotor 10 (shown at FIG. 4B). In such an embodiment, which can be combined with any other embodiment described herein, the level or intensity of the cooling of the rotor 10 may be adapted or varied based on the measured temperature of the sensor 42. In another embodiment, which can be combined with any other embodiment described herein, the cooling unit 1 may operate with a fixed or variable flow rate which is adjusted based on a signal or on temperature reading from the temperature sensor 42 (shown in FIG. 4B). The system may comprise a controller adapted to control the flow within the cooling path based on the temperature measured by the sensor 42. As such the cooling unit 1 may use a variable debit pump in order to increase or decrease the debit of the cooling fluid within the system based on the detected temperature level of the ring.

The controller may further be configured to vary the debit or volume of cooling fluid within the internal channel 41 when the temperature rises over a predetermined level. In other embodiments, which can be combined with any other embodiment described herein, the controller may further be configured to iteratively increase debit of cooling fluid. As an example, if the controller calculates that the temperature keeps on increasing even if debit of cooling fluid is increased, the debit may further be increased or the temperature of the cooling fluid may further be cooled to a lower temperature. In some embodiments, which can be combined with any other embodiment described herein, the controller may also reduce the speed of rotation of the debarker ring to reduce the detected temperature.

In another scenario, if the temperature is lower or at an acceptable level, the controller may be configured to reduce the debit of cooling fluid to reduce consumption of the cooling system. Preferably, the controller may be configured to further increase the speed of rotation of the debarker ring 10 to increase the production speed or gain in efficiency. Again, the controller may perform this process iteratively and automatically stops the increase of rotation speed when the detected temperature level is within an acceptable operational range. Understandably, the controller may be configured to combine or alternate the above steps in order to optimize operational conditions of the debarker machine, ultimately resulting in efficiency gains.

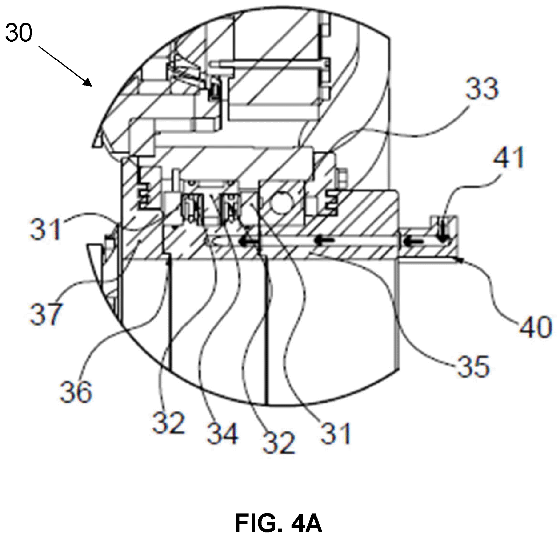

Referring to FIGS. 4A and 4B, an embodiment of the inner channel 41 and other components is illustrated. In this embodiment, which can be combined with any other embodiment described herein, the debarker ring 10 comprises an air seal 30. The air seal 30 comprises two fixed rings 31 and two rotating rings 32. The ring 10 further comprises air suppliers or central structures. In such an embodiment, which can be combined with any other embodiment described herein, the air suppliers are embodied as tunnels 35, 36, and 37. The central structures are generally configured to supply air to a plenum 34. In use, the plenum 34 rotates along with the tunnels 35, 36 and 37, delivering air to rotating balloons 38. A ball bearing 33 is present to facilitate the rotation between the fixed and the rotating components. Due to friction, heat is generated between the fixed rings 31 and rotating rings 32.

Still referring to FIG. 4A, the illustrated arrows depict an exemplary directional flow path of the cooling fluid through internal channel 41 toward the air seal 30. The internal channel 41 generally flows coolant fluid toward the suppliers, the rotating rings 32 and/or the fixed rings 32.

In further embodiments, which can be combined with any other embodiment described herein, the system may comprise another temperature sensor or probe (not shown) positioned near or adjacent to the air seal 30. The detected temperature from the second temperature sensor may be used to detect increased heat in the air seal 30. The second temperature sensor may be inserted in the system toward the air seal 30, similarly to the ring temperature probe 41 as shown in FIG. 4B.

The temperature sensor 42 or air seal temperature sensor may be embodied as any probe, detector or electronic sensor which may be in data communication with the controller or a computerized device.

In embodiments using a controller, the controller may be configured to use a signal from the temperature sensor to vary the debit of cooling fluid or operation of the cooling unit to lower the temperature of the air seal. As such, in some embodiments, which can be combined with any other embodiment described herein, the controller may be configured to use the detected temperatures of both temperature sensors to determine if and how the operation of the cooling unit 1 is adapted to maintain an inner temperature of the ring and/or the air seal 30 within a desired operational range. In some embodiments, which can be combined with any other embodiment described herein, the controller may calculate an average of the different values or may compare each detected value to different acceptable values dependant on the component that is monitored. The controller may operate at different frequencies to allow precise adaptation of the cooling unit 1 based on the detected temperature values. The controller may be any type of industrial controller or programmable computer. A controller typically comprises a processor adapted to process instructions to optimize the operation of the debarker and transient and/or non-transient memory. The controller may further comprise input and/or output connections, network communication unit and any other component found in a computerized device.

One skilled in the art shall understand that any number of temperature sensors or probes may be mounted in the system to detect temperature variations at any location susceptible of generating heat which could degrade the said component.

Oil may be supplied between the components to reduce heat generation. However, at higher rotational speeds, the heat becomes excessive. Excessive heat may impair or damage the ball bearing 33 and result in significant damage to the machine. As such, an internal channel 41 may be present inside the walls of the tunnel 35, creating a path for the cooling fluid near the internal components. Understandably, the placement of the internal channel 41 may vary and does not necessarily need to be positioned inside the tunnel 35. The number of internal channels 41 for a single set of internal components may also vary and may be adapted based on the data of the internal temperature sensor 42.

FIGS. 5A and 5B further illustrate an embodiment of the path of the cooling fluid through the debarker ring 10. A block 40 connected to both ends of the internal channel 41 generally provides cooling fluid to the said internal channel 41. The block 40 is supplied with cooling fluid via conduits 21 or temperature lines 2 and 3 and forms a closed-loop circuit with the cooling unit 1.

Still referring to FIG. 5B, the illustrated arrows depict an exemplary directional flow path of the cooling fluid through internal channel 41 within the debarker ring 10. The flow of the cooling fluid allows cooling of inner components of the internal channel 41.

The cooling system of the present invention generally aims at reducing wear between the friction rings by maintaining a lower temperature during operation, thereby preventing premature component degradation. Temperature control allows the debarker ring 10 to operate at speeds up to approximately 15% higher than conventional systems, thereby enhancing overall productivity.

In other embodiments, which can be combined with any other embodiment described herein, a method of cooling a log debarker is provided. The method generally allows the increase of the efficiency and/or the speed at which logs are debarked along a production line by optimizing the operational temperature of debarker. The method generally comprises circulating a cool fluid around a ring of the log debarker to absorb heat generated by the said ring and cooling the fluid having absorbed heat before returning to the ring.

The method may also comprise circulating the cooled fluid within a first inner channel of the log debarker ring, circulating the fluid out of the first inner channel and circulating the fluid which exits from the first inner channel within a second inner channel of the debarker ring.

The method may further comprise detecting temperature around the ring and controlling flow rate of the cool fluid based on the detected temperature. The method may further comprise detecting a temperature near the air seal 30 of the debarker and using the detected temperature to vary the flow rate of the cooling fluid based on the detected temperature. The method may further comprise varying the speed of rotation of the debarker ring based on the measured temperature within the ring or the air seal. In other embodiments, which can be combined with any other embodiment described herein, the method may comprise increasing the cooling power of the cooling unit by detecting the temperature of the cooling liquid after absorbing heat from the debarker. The method may comprise calculating a temperature delta between the cooled liquid and the heated liquid to vary the cooling power of the cooling unit.

An industrial machinery specialist would not have spontaneously thought of integrating a liquid cooling circuit into a debarking system using rotary air seals.

While illustrative and presently preferred embodiments of the invention have been described in detail hereinabove, it is to be understood that the inventive concepts may be otherwise variously embodied and employed and that the appended claims are intended to be construed to include such variations except insofar as limited by the prior art. The embodiments described hereinabove may be combined with any other embodiment also described hereinabove.

## Claims

1. A log debarking apparatus comprising:
a frame;
a debarker ring rotatably mounted to the frame and adapted to receive and debark a log by rotating cutting tools around the log;
a cooling system configured to circulate a cooling fluid within the debarker ring.

2. The log debarking apparatus of claim 1, the cooling system comprising:
a cooling unit;
a closed-loop fluid circuit in fluid communication with the cooling system, the circuit comprising a cooled supply line and a heat absorbed return line fluidly connected to an inner portion of the debarker ring.

3. The log debarking apparatus of claim 2, wherein the cooling system is selected from the group consisting of a heat pump, geothermal system, and a liquid chiller.

4. The log debarking apparatus of claim 2 or 3, the debarker ring comprising:
a rotary air seal and a bearing assembly facilitating relative movement between stationary and rotating parts; and
internal cooling channels proximate to the rotary seal and the bearing assembly adapted to dissipate heat generated during operation of the debarker ring, the internal cooling channels being in fluid communication with the cooling system.

5. The log debarking apparatus of claim 4, wherein the rotary air seal comprises fixed and rotating friction rings, the cooling channels being positioned adjacent to friction interfaces to optimize dissipation of heat from the friction ring.

6. The log debarking apparatus of claim 4 or 5, wherein the bearing assembly is thermally coupled to the fluid circuit to maintain the bearing assembly within an operating temperature range during operation.

7. The log debarking apparatus of any one of claims 1 to 6 further comprising a temperature sensor configured to detect temperature within the debarker ring.

8. The log debarking apparatus of claim 7, the temperature sensor being operatively connected to a flow controller adapted to regulate the flow rate of the cooling fluid based on the detected temperature.

9. The log debarking apparatus of any one of claims 1 to 8, wherein fluid is a coolant liquid.

10. The log debarking apparatus of any one of claims 1 to 9, the cooling system comprising input and output tubes forming a coolant path around the debarker ring.

11. The log debarking apparatus of claim 10, the coolant path being divided into three sections positioned around the ring.

12. The log debarking apparatus of any one of claims 1 to 11, wherein the debarker ring comprises air suppliers configured as tunnels, and wherein the cooling system comprises internal channels positioned inside walls of the tunnels to create a path for the cooled fluid.

13. A method of cooling a log debarker comprising:
circulating a cool fluid around a ring of the log debarker to absorb heat generated by the said ring; and
cooling the fluid having absorbed heat before returning to the ring.

14. The method of cooling a log debarker of claim 13 comprising:
circulating the cooled fluid within a first inner channel of the log debarker ring;
circulating the fluid out of the first inner channel; and
circulating the fluid exited from the first inner channel within a second inner channel of the debarker ring.

15. The method of cooling a log debarker of claim 13 or 14 comprising:
detecting temperature around the ring;
controlling flow rate of the cool fluid based on the detected temperature.
